# EUROPÄISCHE PATENTSCHRIFT

(11) **EP 2 886 496 B1**
(45) Veröffentlichungstag und Bekanntmachung des Hinweises auf die Patenterteilung: **24.08.2016**
(21) Anmeldenummer: 14194765.5
(22) Anmeldetag: 25.11.2014
(51) Int. Cl.: B65G 47/14, B65G 47/91

(54) **Vorrichtung und Verfahren zum Aufnehmen von Werkstücken**
Device and method for holding workpieces
Dispositif et procédé destinés à réceptionner des pièces à usiner

(30) Priorität: 20.12.2013 DE 102013021716
(43) Veröffentlichungstag der Anmeldung: 24.06.2015
(73) Patentinhaber: Gerresheimer Regensburg GmbH, 93047 Regensburg (DE)
(72) Erfinder: Eichstätter, Markus, 92533 Wernberg-Köblitz (DE)
(74) Vertreter: Hannke, Christian

(56) Entgegenhaltungen:
- EP-A1- 1 845 040
- WO-A1-02/46071
- US-A- 4 266 905
- US-A- 4 352 440
- US-A- 5 899 341
- US-B1- 6 260 259

## Beschreibung

Die Erfindung betrifft eine Vorrichtung und ein Verfahren zum Aufnehmen von Werkstücken.

Solche Vorrichtungen und Verfahren sind aus dem Stand der Technik bereits in vielfältiger Weise bekannt. Beispielsweise ist eine Vorrichtung nach dem Oberbegriff des Patentanspruchs 1 aus der DE 20 2011 109 506 U1 bekannt. Nachteilig bei einer derartigen Vorrichtung ist allerdings der konstruktive Aufwand, der betrieben werden muss, um die dortigen Werkstücke aufzunehmen und auszurichten.

Solche Vorrichtungen und Verfahren werden insbesondere auch bei Anlagen zur Herstellung von mit Kunststoff umhüllten Nadeln oder Kanülen verwendet. Dabei muss zu Beginn des Prozesses eine Nadel/Kanüle in eine dafür vorgesehene Stelle im Spritzgießwerkzeug eingelegt werden. Dieser Prozessschritt erfolgt komplett automatisch mithilfe von Greifelementen, die zwischen einem Magazin mit einem Nadelvorrat und dem Spritzgießwerkzeug agieren. Da die Nadeln einen sehr kleinen Durchmesser aufweisen (0,3mm und kleiner) liegt die Schwierigkeit in der Vereinzelung darin, genau eine Nadel aus einem Magazin zu entnehmen. Werden nämlich mehrere Nadeln aufgenommen und im Werkzeug abgelegt, so entsteht nicht nur Ausschuss, sondern es besteht zusätzlich die Gefahr einer Beschädigung des Werkzeugs wegen fehlplatzierter Nadeln.

Zum Transport der Nadeln oder auch anderer Werkstücke eignen sich insbesondere Vakuumsaugköpfe, die mit einer Unterdruckerzeugungseinrichtung verbunden sind und dadurch die Nadeln beziehungsweise Werkstücke sicher zu ihrer Entladeposition transportieren können. Zur Vereinzelung der Nadeln gibt es aus dem Stand der Technik beispielsweise bereits die oben erwähnte DE 20 2011 109 506 U1. Dabei wird mit einem separat ablaufenden Vereinzelungsschritt und einem anschließenden Aufnahmeschritt gearbeitet. Bei dem Vereinzelungsschritt werden die Nadeln beziehungsweise Werkstücke aus dem Magazin z. B. mittels eines Schiebers oder eines Trichters im Vorfeld vereinzelt. Anschließenden werden in dem Aufnahmeschritt die Nadeln beziehungsweise Werkstücke mit einem Vakuumsauger zum weiteren Transport weitergeschoben. Zwar lässt sich hierdurch selbstverständlich ebenso die Gefahr einer Fehlaufnahme von Nadeln beziehungsweise Werkstücken verhindern. Allerdings ist diese Variante als sehr aufwendig einzustufen, da neben dem Vakuumsauger auch eine zusätzliche Vereinzelungsvorrichtung in Form des Schiebers benötigt wird.

US 6,260,259 B1 beschreibteine gattungsgemäße Vorrichtung.

Der vorliegenden Erfindung liegt daher die Aufgabe zugrunde, eine Vorrichtung und ein Verfahren zum Aufnehmen von Werkstücken der eingangs genannten Art derart weiter zu verbessern, dass eine sichere Vereinzelung der Werkstücke bei gleichzeitig einfachem konstruktiven Aufbau der Vorrichtung gewährleistet ist.

Gelöst wird diese Aufgabe durch eine Vorrichtung mit allen Merkmalen des Patentanspruchs 1 und ein Verfahren mit allen Merkmalen des Patentanspruchs 5. Vorteilhafte Ausgestaltungen der Erfindung finden sich in den Unteransprüchen.

Die erfindungsgemäße Vorrichtung zum Aufnehmen von Werkstücken weist wenigstens ein Werkstücke aufnehmendes Magazin und wenigstens ein Greifelement zur Aufnahme eines Werkstückes auf, wobei das Greifelement als Vakuumgreifelement ausgebildet ist und eine Aufnahme für Werkstücke aufweist und wobei eine Vakuumerzeugungseinrichtung vorgesehen ist, die mit dem Vakuumgreifelement in Wirkverbindung für eine Vakuumbeaufschlagung steht, wobei eine Steuereinrichtung für die Vakuumerzeugungseinrichtung vorgesehen ist, mittels welcher das Vakuum in Abhängigkeit von der Position des Vakuumgreifelements und/oder dessen Bestückung mit Werkstücken steuerbar ist.

Durch die Erfindung ist es auf eine einfachere Art und Weise möglich, sicher Werkstücke direkt aus einem einen Werkstückvorrat aufweisenden Magazin mittels des Vakuumgreifelementes zu vereinzeln und anschließend zu transportieren. Mittels der Steuerungseinrichtung ist die Höhe des am Vakuumgreifelement anliegenden Unterdrucks während des Prozesses veränderbar. Nähert sich das Vakuumgreifelement dem Magazin, so verändert die Steuerungseinrichtung den Unterdruck derart, dass genau ein Werkstück am Vakuumgreifelement haften bleibt. Entfernt sich das Vakuumgreifelement danach vom Magazin, so wird der Unterdruck beziehungsweise das Vakuum schlagartig oder kontinuierlich erhöht, um die Transportsicherheit gewährleisten zu können.

Damit die Werkstücke besonders gut zu vereinzeln und zu positionieren sind, ist die Aufnahme des Vakuumgreifelementes zumindest im Bereich einer Vakuumbeaufschlagung der Form der Werkstücke angepasst. Durch diese Ausgestaltung ist es besonders gut ermöglicht, genau ein Werkstück mit dem Vakuumgreifelement aus einem Magazin aufzunehmen.

Um den Druck am jeweiligen Vakuumgreifelement kontrollieren zu können, ist dem wenigstens einen Vakuumgreifelement wenigstens ein Drucksensor zugeordnet. Die vom Drucksensor ermittelten Druckwerte werden vorzugsweise der Steuereinheit zur Verfügung gestellt, damit diese Druckanpassungen im Vakuumsystem veranlassen kann.

Um insbesondere den Druck im Vakuumsystem erhöhen zu können, ohne die Vakuumerzeugungseinrichtung ansteuern zu müssen, weist die Steuereinrichtung eine Druckerhöhungseinrichtung auf, welche vorzugsweise in Form einer eine Drossel aufweisenden Bypassleitung ausgebildet ist.

Das erfindungsgemäße Verfahren zum Aufnehmen von Werkstücken mit einer zuvor beschriebenen Vorrichtung zeichnet sich durch folgende Verfahrenschritte aus:
a) Verfahren des wenigstens einen Vakuumgreifelementes in eine Ladeposition über ein Werkstücke aufweisendes Magazin,
b) Einstellung des Vakuums durch die Steuereinrichtung für die Vakuumerzeugungseinrichtung derart, dass die Vakuumkraft der Gewichtskraft eines Werkstückes entspricht,
c) Aufnahme genau eines Werkstückes durch das wenigstens eine Vakuumgreifelement,
d) Verfahren des wenigstens einen Vakuumgreifelementes aus der Ladeposition über ein Werkstücke aufweisendes Magazin heraus,
e) Einstellung des Vakuums durch die Steuereinrichtung für die Vakuumerzeugungseinrichtung derart, dass die Vakuümkräft größer als die Gewichtskraft des in dem wenigstens einem Vakuumgreifelement aufgenommenen Werkstücks ist,

Dabei soll unter der Gewichtskraft nicht nur die Kraft, welche durch die Gravitationsbeschleunigung auf das Werkstück einwirkt, verstanden werden. Vielmehr sollen darunter alle Kräfte die durch Beschleunigungen aller Art auf das Werkstück einwirken verstanden werden. Insbesondere soll die derart definierte Gewichtskraft auch die durch die Beschleunigung des Greifelementes auf das Werkstück wirkende Kraft mitberücksichtigen.

Durch die erfindungsgemäße Ausgestaltung des Verfahrens ist es in einfacher Art und Weise ermöglicht, sicher Werkstücke direkt aus einem einen Werkstückvorrat aufweisenden Magazin mittels des Vakuumgreifelementes zu vereinzeln und anschließend zu transportieren. Mittels der Steuerungseinrichtung ist die Höhe des am Vakuumgreifelement anliegenden Unterdrucks während des Prozesses veränderbar.

Die Einstellung des Vakuums gemäß Verfahrensschritt b) kann dabei unterschiedlich-erfolgen.

Nach einer ersten vorteilhaften Ausgestaltung der Erfindung erfolgt die Einstellung des Vakuums gemäß Verfahrensschritt b) derart, dass ein durch die Vakuumerzeugungseinrichtung erzeugtes Vakuum derart reduziert wird, dass die Vakuumkraft der Gewichtskraft eines Werkstückes entspricht. Dabei wird das Vakuumgreifelement mit einem konstant hohen, durch die Vakuumerzeugungseinrichtung erzeugten Vakuum in die Ladeposition verfahren. Dabei kann es passieren, dass in Folge von Fehlluft am Vakuumgreifelement mehr als ein Werkstück am Vakuumgreifelement durch das hohe Vakuum im Bereich der Aufnahme anliegen. Damit die Vereinzelung der Werkstücke sicher erfolgt, wird nachfolgend das durch die Vakuumerzeugungseinrichtung erzeugte Vakuum mittels der Steuereinrichtung reduziert beziehungsweise der Druck erhöht, sodass auch am Vakuumgreifelement das Vakuum reduziert beziehungsweise der Druck erhöht wird. Dabei wird das Vakuum solange reduziert beziehungsweise der Druck erhöht, bis die Kraft des Vakuums nur noch in der Lage ist, ein einziges Werkstück in der Aufnahme des Greifelementes zu halten. Somit ist durch diese erfindungsgemäße Ausgestaltung die sichere Vereinzelung von Werkstücken sichergestellt.

Nach einer anderen vorteilhaften Ausgestaltung der Erfindung erfolgt die Einstellung des Vakuums gemäß Verfahrensschritt b) derart, dass ein durch die Vakuumerzeugungseinrichtung erzeugtes Vakuum derart erhöht wird, dass die Vakuumkraft der Gewichtskraft eines Werkstückes entspricht. Dabei wird das Vakuumgreifelement mit einem konstant niedrigen, durch die Vakuumerzeugungseinrichtung erzeugten Vakuum oder gar keinem Vakuum in die Ladeposition verfahren. Bei dieser Ausgestaltung ist von vornherein vermieden, dass in Folge von Fehlluft am Vakuumgreifelement mehr als ein Werkstück am Vakuumgreifelement durch ein hohes Vakuum im Bereich der Aufnahme anliegen. Damit die Vereinzelung der Werkstücke sicher erfolgt und genau ein Werkstück in die Aufnahme des Vakuumgreifelements aufgenommen wird, wird nachfolgend das durch die Vakuumerzeugungseinrichtung erzeugte Vakuum mittels der Steuereinrichtung erhöht beziehungsweise der Druck reduziert, sodass auch am Vakuumgreifelement das Vakuum erhöht beziehungsweise der Druck reduziert wird. Dabei wird das Vakuum solange erhöht beziehungsweise der Druck reduziert, bis die Kraft des Vakuums in der Lage ist, genau ein Werkstück in der Aufnahme des Greifelementes zu halten. Somit ist durch diese erfindungsgemäße Ausgestaltung die sichere Vereinzelung von Werkstücken sichergestellt.

Bei beiden zuvor beschriebenen Ausgestaltungen muss dabei zur Berechnung der Vakuumkraft Fᵥ sowohl der Vakuumdruck Pᵥ als auch der Umgebungsdruck Pᵤ berücksichtigt werden, wobei die Kraft als Druck pro Fläche definiert ist und als Fläche, die Fläche der Druckbeaufschlagung benutzt werden muss. Die Differenz der Vakuumkraft Fᵥ und der Kraft Fᵤ des Umgebungsdrucks Pᵤ muss dabei mindestens der Gewichtskraft G eines Werkstückes entsprechen, um mindestens ein Werkstück zu halten, darf aber auch nur unwesentlich höher sein, damit aufgrund von möglicherweise auftretender Fehlluft trotzdem eine zuverlässige Vereinzelung der Werkstücke bei der Entnahme aus einem Magazin durch das Vakuumgreifelement erfolgt. Auch hierbei soll unter der Gewichtskraft G wiederum alle Kräfte verstanden werden, die aufgrund Beschleunigungen aller Art auf das Werkstück einwirken.

Dabei kann zum einen die Einstellung des Vakuums gemäß Verfahrensschritt b) derart erfolgen, dass die Steuereinrichtung die Vakuumerzeugungseinrichtung anhand von vorgegebenen, an die Werkstücke angepassten Druckwerten für das Vakuum ansteuert.

Zum anderen kann die Einstellung des Vakuums gemäß Verfahrensschritt b) aber auch derart erfolgen, dass die Steuereinrichtung die Vakuumerzeugungseinrichtung anhand des von dem wenigstens einen Drucksensor gelieferten Druckwertes kontinuierlich ansteuert, wobei vorzugsweise ein Regelkreis verwendet wird, bei dem der von dem wenigstens einen Drucksensor gelieferten Druckwert als Regelgröße und ein Vakuumwert, der eine Vakuumkraft erzeugt, die der Gewichtskraft eines Werkstückes entspricht, als Führungsgröße verwendet wird.

Nach einem weiteren Gedanken der Erfindung kann nach Durchführung von Verfahrensschritt e) das Vakuumgreifelement in eine Entladeposition verfahren werden, in welcher das Vakuumgreifelement das Werkstück in der dafür vorgesehenen Entladeposition ablegt.

Nach Verfahren des Vakuumgreifelementes in die Entladeposition wird mittels der Steuereinrichtung die Vakuumerzeugungseinrichtung derart angesteuert, dass das Vakuum reduziert wird, bis die Vakuumkraft nicht mehr ausreicht, das Gewicht des Werkstückes zu halten und das Werkstück somit in der dafür vorgesehenen Entladeposition abgelegt wird.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmalen für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein Ausführungsbeispiel eines Vakuumgreifelementes einer erfindungsgemäßen Vorrichtung in einer Detaildarstellung in einer perspektivischen Ansicht von unten,
- Figur 2:: ein Ausführungsbeispiel eines Spritzgußwerkzeuges mit einer Beförderungseinrichtung, die Vakuumgreifelemente gemäß Figur 1 aufweist, in einer perspektivischen Ansicht,
- Figur 3:: ein Vakuumgreifelement einer erfindungsgemäßen Vorrichtung beim Verfahren von einer Ladeposition in eine Entladeposition kurz vor deren Erreichen,
- Figur 4:: das Vakuumgreifelement der Figur 3 in der Entladeposition,
- Figur 5:: das Vakuumgreifelement der Figuren 3 und 4 in der Ladeposition,
- Figur 6:: ein Vakuumgreifelement einer erfindungsgemäßen Vorrichtung beim Verfahren von einer Ladeposition kurz vor deren Verlassen in eine Entladeposition,
- Figur 7:: schematische Darstellung des Vakuumsystems einer erfindungsgemäßen Vorrichtung,
- Figur 8:: eine Detaildarstellung der Figur 7.

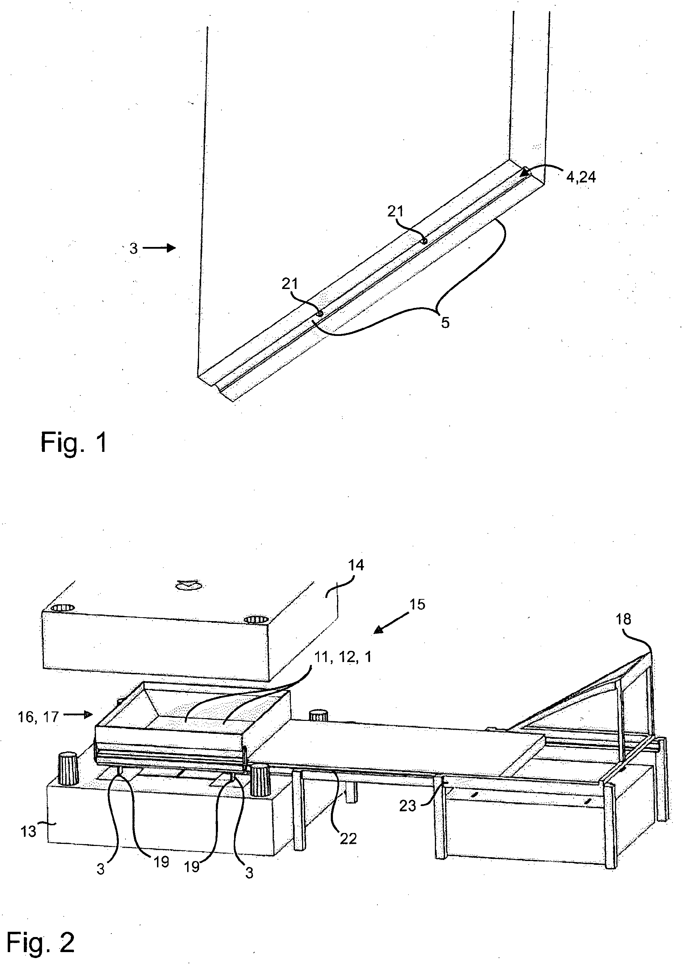

Aus Figur 2 ist der strukturelle Aufbau eines Spritzgußwerkzeuges mit mehreren erfindungsgemäßen Vorrichtungen dargestellt. Das Spritzgußwerkzeug weist eine erste Werkzeughälfte 13 und eine zweite Werkzeughälfte 14 auf. Die Werkzeughälfte 13 ist in diesem Ausführungsbeispiel unten angeordnet, während die Werkzeughälfte 14 oben angeordnet ist. Die erste Werkzeughälfte 13 ist ortsfest an einem Boden angeordnet, während die zweite Werkzeughälfte 14 gegenüber der ersten Werkzeughälfte 13 vertikal verfahrbar ist. Die Darstellung der Figur 2 zeigt das Spritzgußwerkzeug in einer offenen Position, in welcher eine Beförderungseinrichtung 15 zwischen die erste Werkzeughälfte 13 und die zweite Werkzeughälfte 14 eingefahren ist. Die Beförderungseinrichtung 15 ist dabei auf einem Gestell 23 angeordnet, auf welchem es mittels eines Schienensystems 22 zwischen die beiden Werkzeughälften 13 und 14 hinein und heraus verfahrbar ist.

Die Beförderungseinrichtung 15 weist zu der zweiten Werkzeughälfte 14 hinweisend ein Entnahmeelement 16 in Form eines Auffangbehälters 17 zur Entnahme eines fertigen Kunststoffteils 11 mit Nadel 12, die hierbei als zu vereinzelnde Werkstücke 1 dienten, aus der zweiten Werkzeughälfte 4 auf. Schieber-/stiftartigen Auswerfer, die die fertigen Kunststoffteile 11 mit Nadel 12 aus der zweiten Werkzeughälfte auswerfen, sind in den Figuren nicht dargestellt.

Zur Werkzeughälfte 13 hinweisend weist die Beförderungseinrichtung 15 in diesem Ausführungsbeispiel vier Vakuumgreifelemente 3 jeweils zur Ablage eines Werkstückes 1 beziehungsweise einer Nadel 11 in eine entsprechende Kavität 19 der ersten Werkzeughälfte 13 auf, wobei die Kavitäten 19 während des Spritzgießens mit Kunststoff gefüllt werden, sodass das Kunststoffteil 1 mit integrierter Nadel 12 entsteht.

In Figur 1 ist eine perspektivische Ansicht eines Vakuumgreifelementes 3 von unten gezeigt. Deutlich zu erkennen sind dabei zwei Öffnungen 21, an welche hier nicht dargestellte Vakuumleitungen anordenbar sind. Die Öffnungen 21 befinden sich dabei in einer Aufnahme 4 für Werkstücke 1, welche vorliegend als Rille 24 ausgebildet ist, sodass die Öffnungen 21 während des Transports des Werkstückes 1 durch dieses verschlossen sind.

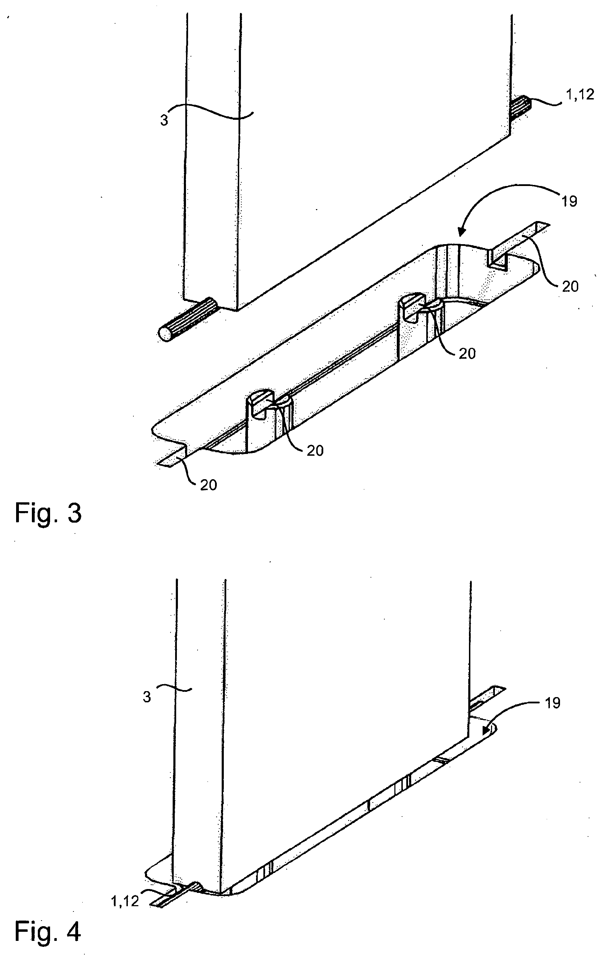

In der Figur 3 ist deutlich eine der Kavitäten 19 zu erkennen, in welche das Werkstück 2 in Form einer Nadel 12 zur Umspritzung mit Kunststoff eingelegt werden soll. Deutlich ist dabei auch eine Ablagegeometrie 20 zu erkennen, in welche das Werkstück 1 abgelegt wird. Dabei kann die Ablagegeometrie 20 entsprechende, hier nicht näher dargestellte Flächen aufweisen, mittels welcher das Werkstück 1 zwangsgeführt in seine Endposition in die Kavität 19 überführbar ist.

Wie insbesondere der Figur 4 zu entnehmen ist, ist das Vakuumgreifelement 3 mittlerweile in Richtung der Kavität 19 in eine Entladeposition verfahren, sodass das Werkstück 1 in der Ablagegeometrie 20 eingelegt ist. In dieser Position kann das Vakuum des Vakuumgreifelements 3 reduziert oder aufgehoben werden, sodass das Vakuumgreifelement 3 wieder in Richtung der Beförderungseinrichtung 15 verfahrbar ist, ohne dass dabei das in die Kavität 19 eingelegte Werkstück1 wieder daraus entnommen wird.

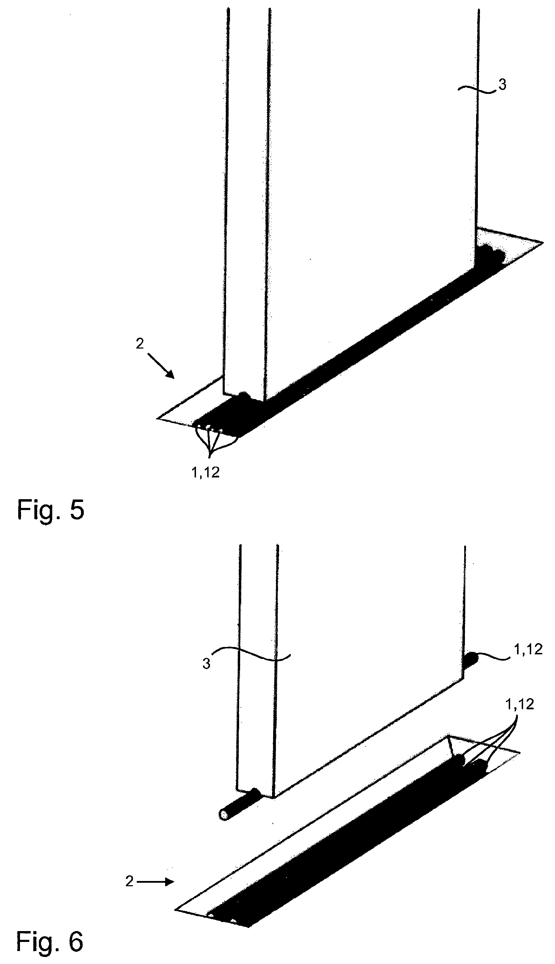

In Figur 5 ist das Vakuumgreifelement 3 in ein Magazin 2 in eine Ladeposition abgesenkt, sodass ein Werkstück 1 aufgenommen werden kann, indem das Vakuumgreifelement 3 mit einem entsprechenden Vakuum beaufschlagt wird. Die Ansteuerung einer Vakuumerzeugungseinrichtung 6 mittels einer Steuereinrichtung wird weiter unten noch detailliert beschrieben.

Figur 6 zeigt nunmehr das Vakuumgreifelement 3 der Figur 5, nachdem es ein Werkstück 1 mittels Vakuum aufgenommen hat und bereits wieder aus der Ladeposition heraus verfahren wurde.

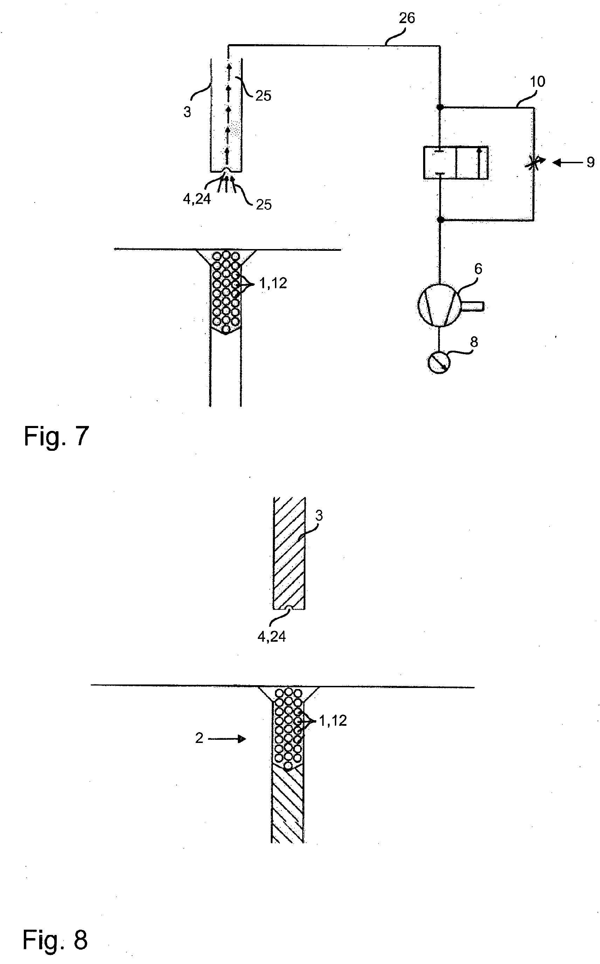

Figur 7 zeigt nun den schematischen Aufbau der erfindungsgemäßen Vorrichtung. Die Vorrichtung besteht im Wesentlichen aus einer Vakuumerzeugungseinrichtung 6, welche mittels Vakuumleitungen 26 mit einem Vakuumgreifelement 3 wirkverbunden ist. Ferner weist die Vorrichtung noch eine Steuereinrichtung 7 auf, mittels welcher die Vakuumerzeugungseinrichtung 6 ansteuerbar ist. Weiterhin ist in diesem Ausführungsbeispiel eine Bypassleitung 10, in welcher eine Drossel 9 angeordnet ist, vorgesehen. Ein Drucksensor 8 misst hierbei den im Vakuumsystem herrschenden Druck, der, da es sich um ein Vakuumsystem handelt, als Unterdruck gegenüber dem Umgebungsdruck ausgebildet ist.

Das Vakuumgreifelement 3 ist mittels hier nicht dargestellter Elemente verfahrbar ausgebildet. In der Darstellung der Figur 7 befindet sich das Vakuumgreifelement 3 in einer Position über einem eine Vielzahl von Werkstücken 1 aufweisenden Magazin. Mittels der Vakuumerzeugungseinrichtung 6 und der Steuerung 7 sowie der Vakuumleitung 10 wird im Vakuumsystem ein Unterdruck aufrechterhalten, der einem Luftstrom 25 von der Umgebung durch die Öffnungen 21 der als Rille 24 ausgebildeten Aufnahme 4 hin zur Vakuumerzeugungseinrichtung 6 zur Folge hat. Dieser Luftstrom 26 ist derart stark, dass dadurch eine Kraft gebildet ist, die in der Lage ist, mehrere Werkstücke 1 an dem Vakuumgreifelement 3 zu halten, wenn diese in eine Ladepostion gemäß Figur 5 verfahren wird und die Öffnungen 21 nicht vollständig verschlossen sind, sodass Fehlluftströme auftreten. Würde man nun das Vakuumgreifelement 3 aus der Ladeposition verfahren, würden mehrere Werkstücke daran anhaften, sodass eine sichere Vereinzelung von Werkstücken 1 nicht gegeben wäre. Damit aber eine sichere Vereinzelung von Werkstücken 1 mit dem Vakuumgreifelement 3 erfolgen kann, wird mittels der Steuerung 7 die Vakuumerzeugungseinrichtung 6 und/oder die Drossel 9 innerhalb der Bypassleitung 10 derart angesteueret, dass die Stärke des Luftstroms 25 reduziert wird, bis nur noch ein Werkstück an dem Vakuumgreifelement 3 anhaftet. Wenn dies der Fall ist, wird das Vakuumgreifelement 3 aus der Ladeposition gemäß Figur 5 heraus verfahren. Dabei haftet nunmehr nur ein Werkstück 1 an dem Vakuumgreifelement 3 an, wobei dieses Werkstück 1 erfolgreich vereinzelt wurde und durch die als Rille 24 ausgebildete Aufnahme 4 auch wie gewünscht positioniert und orientiert ist. Sobald das Vakuumgreifelement 3 weit genug von dem Magazin entfernt ist, dass Fehlströme nicht mehr in der Lage sind, weitere Werkstücke 1 an dem Vakuumgreifelement 3 anhaften zu lassen, kann das Vakuum innerhalb des Vakuumsystems erhöht beziehungsweise der Druck reduziert werden. Hierzu erfolgt wiederum durch die Steuerung 7 eine entsprechende Ansteuerung der Vakuumerzeugungseinrichtung 6 und/oder der in der Bypassleitung 10 angeordneten Drossel 9.

Nachdem das Vakuum im Vakuumsystem wieder erhöht beziehungsweise der Druck entsprechend reduziert wurde, ist es nun durch den starken Unterdruck im Vakuumsystem sicher möglich, das durch das Vakuumgreifelement 3 aufgenommene vereinzelte Werkstück 1 unverlierbar zu transportieren und in eine Entladeposition gemäß Figur 4 zu überführen.

### Bezugszeichenliste

- 1: Werkstück
- 2: Magazin
- 3: Greifelement, Vakuumgreifelement
- 4: Aufnahme
- 5: Bereich
- 6: Vakuumerzeugungseinrichtung
- 7: Steuereinrichtung
- 8: Drucksensor
- 9: Drossel
- 10: Bypassleitung
- 11: Kunststoffteil
- 12: Nadel
- 13: erste Werkzeughälfte
- 14: zweite Werkzeughälfte
- 15: Beförderungseinrichtung
- 16: Entnahmeelement
- 17: Auffangbehälter
- 18: Kippgeometrie
- 19: Kavität
- 20: Ablagegeometrie
- 21: Öffnungen
- 22: Schienensystem
- 23: Gestell
- 24: Rille
- 25: Luftstrom
- 26: Vakuumleitung

## Patentansprüche

1. Vorrichtung zum Aufnehmen von Werkstücken (1) mit wenigstens einem Werkstücke (1) aufnehmenden Magazin (2), wenigstens einem Greifelement (3) zur Aufnahme eines Werkstückes (1),
wobei das Greifelement (3) als Vakuumgreifelement (3) ausgebildet ist und eine Aufnahme (4) für Werkstücke (1) aufweist und dass eine Vakuumerzeugungseinrichtung (6) vorgesehen ist, die mit dem Vakuumgreifelement (3) in Wirkverbindung für eine Vakuumbeaufschlagung steht, wobei eine Steuereinrichtung (7) für die Vakuumerzeugungseinrichtung (6) vorgesehen ist, mittels welcher das Vakuum in Abhängigkeit von der Position des Vakuumgreifelements (3) und/oder dessen Bestückung mit Werkstücken (1) steuerbar ist,
**dadurch gekennzeichnet, dass**
in einer Ladeposition durch die Steuerungseinrichtung (7) die Vakuumkraft entsprechend der Gewichtskraft eines Werkstücks (1) eingestellt wird, um genau ein Werkstück (1) aufzunehmen.

2. Vorrichtung nach Anspruch 1,
**dadurch gekennzeichnet,dass**
die Aufnahme (4) zumindest im Bereich (5) einer Vakuumbeaufschlagung der Form der Werkstücke (1) angepasst ist.

3. Vorrichtung nach einem der vorhergehenden Ansprüche,
**dadurch gekennzeichnet, dass**
dem wenigstens einen Vakuumgreifelement (3) wenigstens ein Drucksensor (8) zugeordnet ist.

4. Vorrichtung nach einem der vorhergehenden Ansprüche,
**dadurch gekennzeichnet,dass**
die Steuereinrichtung (7) eine Druckreduzierungseinrichtung, vorzugsweise in Form einer eine Drossel (9) aufweisenden Bypassleitung (10), aufweist.

5. Verfahren zum Aufnehmen von Werkstücken mit einer Vorrichtung nach einem der vorhergehenden Ansprüche, **gekennzeichnet durch** folgende Verfahrensschritte:
a) Verfahren des wenigstens einen Vakuumgreifelementes (3) in eine Ladeposition über ein Werkstück (1) aufweisendes Magazin (2),
b) Einstellung des Vakuums **durch** die Steuereinrichtung (7) für die Vakuumerzeugungseinrichtung (6) derart, dass die Vakuumkraft der Gewichtskraft eines Werkstückes (1) entspricht,
c) Aufnahme genau eines Werkstückes (1) **durch** das wenigstens eine Vakuumgreifelement (3),
d) Verfahren des wenigstens einen Vakuumgreifelementes (3) aus der Ladeposition über ein Werkstücke (1) aufweisendes Magazin (2) heraus,
e) Einstellung des Vakuums **durch** die Steuereinrichtung (7) für die Vakuumerzeugungseinrichtung (6) derart, dass die Vakuumkraft größer als die Gewichtskraft des in dem wenigstens einem Vakuumgreifelement (3) aufgenommenen Werkstücks (1) ist.

6. Verfahren nach Anspruch 5,
**dadurch gekennzeichnet,dass**
die Einstellung des Vakuums gemäß Verfahrensschritt b) derart erfolgt, dass ein durch die Vakuumerzeugungseinrichtung (6) erzeugtes Vakuum derart reduziert wird, dass die Vakuumkraft der Gewichtskraft eines Werkstückes (1) entspricht.

7. Verfahren nach Anspruch 5,
**dadurch gekennzeichnet,dass**
die Einstellung des Vakuums gemäß Verfahrensschritt b) derart erfolgt, dass eine durch die Vakuumerzeugungseinrichtung (6) erzeugte Vakuumkraft derart erhöht wird, dass die Vakuumkraft der Gewichtskraft eines Werkstückes (1) entspricht.

8. Verfahren nach einem der Ansprüche 5 bis 7,
**dadurch gekennzeichnet,dass**
die Einstellung des Vakuums gemäß Verfahrensschritt b) derart erfolgt, dass die Steuereinrichtung (7) die Vakuumerzeugungseinrichtung (6) anhand von vorgegebenen, an die Werkstücke (1) angepasste Druckwerten für das Vakuum ansteuert.

9. Verfahren nach einem der Ansprüche 5 bis 7,
**dadurch gekennzeichnet, dass**
die Einstellung des Vakuums gemäß Verfahrensschritt b) derart erfolgt, dass die Steuereinrichtung (7) die Vakuumerzeugungseinrichtung (6) anhand des von dem wenigstens einen Drucksensor (8) gelieferten Druckwertes kontinuierlich ansteuert, wobei vorzugsweise ein Regelkreis verwendet wird, bei dem der von dem wenigstens einen Drucksensor (8) gelieferten Druckwert als Regelgröße und ein Vakuumwert, der eine Vakuumkraft erzeugt, die der Gewichtskraft eines Werkstückes entspricht, als Führungsgröße verwendet wird.

10. Verfahren nach einem der Ansprüche 5 bis 9,
**dadurch gekennzeichnet, dass**
nach Durchführung von Verfahrensschritt e) das Vakuumgreifelement (3) in eine Entladeposition verfahren wird.

11. Verfahren nach Anspruch 10,
**dadurch gekennzeichnet,dass**
nach Verfahren des Vakuumgreifelementes (3) in die Entladeposition mittels der Steuereinrichtung (7) die Vakuumerzeugungseinrichtung (6) derart angesteuert wird, dass das Vakuum reduziert wird, bis die Vakuumkraft nicht mehr ausreicht, das Gewicht des Werkstückes (1) zu halten und das Werkstück (1) somit in der Entladeposition abgelegt wird.

## Claims

1. Device for receiving workpieces (1), comprising at least one magazine (2) that receives workpieces (1), and at least one gripping element (3) for receiving a workpiece (1), the gripping element (3) being designed as a vacuum gripping element (3) and comprising a receiving portion (4) for workpieces (1), and a vacuum-generation apparatus (6) being provided which is operatively connected to the vacuum gripping element (3) for the purpose of applying a vacuum, a control apparatus (7) for the vacuum-generation apparatus (6) being provided by means of which the vacuum depending on the position of the vacuum gripping element (3) and/or its manufacturing can be controlled with workpieces (1), **characterised in that**, in a loading position, the vacuum force is adjusted by the control apparatus (7) according to the weight force of a workpiece (1), in order to receive exactly one workpiece (1).

2. Device according to claim 1, **characterised in that** the receiving portion (4) is adapted to the shape of the workpieces (1) at least in the region (5) in which vacuum is applied.

3. Device according to any of the preceding claims, **characterised in that** at least one pressure sensor (8) is assigned to the at least one vacuum gripping element (3).

4. Device according to any of the preceding claims, **characterised in that** the control apparatus (7) comprises a pressure-reducing apparatus, which is preferably in the form of a bypass line (10) comprising a throttle (9).

5. Method for receiving workpieces with a device according to any of the preceding claims, **characterised by** the following method steps of:
a) moving the at least one vacuum gripping element (3) into a loading position above a magazine (2) comprising a workpiece (1),
b) adjusting the vacuum by means of the control apparatus (7) for the vacuum-generation apparatus (6) such that the vacuum force corresponds to the weight force of a workpiece (1),
c) receiving exactly one workpiece (1) by means of the at least one vacuum gripping element (3),
d) moving the at least one vacuum gripping element (3) out of the loading position by means of a magazine (2) comprising workpieces (1),
e) adjusting the vacuum by means of the control apparatus (7) for the vacuum-generation apparatus (6) such that the vacuum force is greater than the weight force of the workpiece (1) received in the at least one vacuum gripping element (3).

6. Method according to claim 5, **characterised in that** the vacuum is adjusted in accordance with method step b) such that a vacuum generated by the vacuum-generation apparatus (6) is reduced so that the vacuum force corresponds to the weight force of a workpiece (1).

7. Method according to claim 5, **characterised in that** the vacuum is adjusted in accordance with method step b) such that a vacuum force generated by the vacuum-generation apparatus (6) is increased so that the vacuum force corresponds to the weight force of a workpiece (1).

8. Method according to any of claims 5 to 7, **characterised in that** the vacuum is adjusted in accordance with method step b) such that the control apparatus (7) actuates the vacuum-generation apparatus (6) on the basis of predefined pressure values for the vacuum that are adapted to the workpieces (1).

9. Method according to any of claims 5 to 7, **characterised in that** the vacuum is adjusted in accordance with method step b) such that the control apparatus (7) continuously actuates the vacuum-generation apparatus (6) on the basis of the pressure value provided by the at least one pressure sensor (8), a control loop preferably being used in which the pressure value provided by the at least one pressure sensor (8) is used as a control variable and a vacuum value that generates a vacuum force corresponding to the weight force of a workpiece is used as a reference variable.

10. Method according to any of claims 5 to 9, **characterised in that**, after carrying out method step e), the vacuum gripping element (3) is moved into an unloading position.

11. Method according to claim 10, **characterised in that**, after moving the vacuum gripping element (3) into the unloading position by means of the control apparatus (7), the vacuum-generation apparatus (6) is actuated such that the vacuum is reduced until the vacuum force is no longer sufficient to support the weight of the workpiece (1), and the workpiece (1) is thus set down in the unloading position.

## Revendications

1. Dispositif destiné à réceptionner des pièces (1) avec au moins un magasin (2) logeant des pièces (1), au moins un élément de préhension (3) destiné à réceptionner une pièce (1),
l'élément de préhension (3) étant conçu comme un élément de préhension par aspiration (3) et comprend un logement (4) pour des pièces (1) et un dispositif de production de vide (6) étant prévu, qui est en liaison fonctionnelle avec l'élément de préhension par aspiration (3) pour une alimentation en vide, un dispositif de commande (7) étant prévu pour le dispositif de production de vide (6), au moyen duquel le vide peut être contrôlé en fonction de la position de l'élément de préhension par aspiration (3) et/ou de son équipement avec des pièces (1),
**caractérisé en ce que**
dans une position de chargement, la force du vide est réglée par le dispositif de commande (7) en fonction du poids d'une pièce (1), afin de ne loger qu'exactement une pièce (1).

2. Dispositif selon la revendication 1,
**caractérisé en ce que**
le logement (4) est adapté, au moins dans la zone (5) d'une alimentation en vide, à la forme des pièces (1).

3. Dispositif selon l'une des revendications précédentes,
**caractérisé en ce qu'**
à l'au moins un élément de préhension par aspiration (3) correspond au moins un capteur de pression (8).

4. Dispositif selon l'une des revendications précédentes,
**caractérisé en ce que**
le dispositif de commande (7) comprend un dispositif de réduction de pression, de préférence sous la forme d'une conduite de by-pass (10) comprenant un étranglement (9).

5. Procédé destiné à réceptionner des pièces avec un dispositif selon l'une des revendications précédentes, **caractérisé par** les étapes suivantes :
a) déplacement de l'au moins un élément de préhension par aspiration (3) sur la position de chargement au-dessus d'un magasin (2) comprenant des pièces (1),
b) réglage du vide par le dispositif de commande (7) pour le dispositif de production de vide (6) de façon à ce que la force du vide corresponde au poids d'une pièce (1),
c) logement d'exactement une pièce (1) par l'au moins un élément de préhension par aspiration (3),
d) déplacement de l'au moins un élément de préhension par aspiration (3) à partir de la position de chargement au-dessus d'un magasin (2) comprenant des pièces (1),
e) réglage du vide par le dispositif de commande (7) pour le dispositif de production de vide (6) de façon à ce que la force du vide soit supérieure au poids de la pièce (1) logée dans l'au moins un élément de préhension par aspiration (3).

6. Procédé selon la revendication 5,
**caractérisé en ce que**
le réglage du vide selon l'étape de procédé b) a lieu de façon à ce qu'un vide produit par le dispositif de production de vide (6) soit réduit de façon à ce que la force du vide corresponde au poids d'une pièce (1).

7. Procédé selon la revendication 5,
**caractérisé en ce que**
le réglage du vide selon l'étape de procédé b) a lieu de façon à ce qu'une force de vide produite par le dispositif de production de vide (6) soit augmentée de façon à ce que la force du vide corresponde au poids d'une pièce (1).

8. Procédé selon l'une des revendications 5 à 7,
**caractérisé en ce que**
le réglage du vide selon l'étape de procédé b) a lieu de façon à ce que le dispositif de commande (7) contrôle le dispositif de production de vide (6) à l'aide de valeurs de pression pour le vide, prédéterminées et adaptées aux pièces (1).

9. Procédé selon l'une des revendications 5 à 7,
**caractérisé en ce que**
le réglage du vide selon l'étape de procédé b) a lieu de façon à ce que le dispositif de commande (7) contrôle de manière continue le dispositif de production de vide (6) à l'aide de la valeur de pression fournie par l'au moins un capteur de pression (8), de préférence un circuit de régulation étant utilisé, dans lequel la valeur de pression fournie par l'au moins un capteur de pression (8) est utilisée en tant que grandeur de régulation et une valeur de vide qui produit une force de vide correspondant au poids d'une pièce, est utilisée comme une grandeur de référence.

10. Procédé selon l'une des revendications 5 à 9,
**caractérisé en ce qu'**
après la réalisation de l'étape de procédé e), l'élément de préhension par aspiration (3) est déplacé vers une position de déchargement.

11. Procédé selon la revendication 10,
**caractérisé en ce qu'**
après le déplacement de l'élément de préhension par aspiration (3) vers la position de déchargement, le dispositif de production de vide (6) est contrôlé au moyen du dispositif de commande (7) de façon à ce que le vide soit réduit jusqu'à ce que la force du vide ne suffise plus à maintenir le poids de la pièce (1) et la pièce (1) est ainsi déposée à la position de déchargement.
